(19) Europäisches Patentamt

European Patent Office

Office européen des brevets

(11) **EP 1 004 040 B1**

(12) **FASCICULE DE BREVET EUROPEEN**

(45) Date de publication et mention
de la délivrance du brevet:
**22.01.2003   Bulletin 2003/04**

(21) Numéro de dépôt: **98942742.2**

(22) Date de dépôt: **14.08.1998**

(51) Int Cl.⁷: $G01T\ 1/24$

(86) Numéro de dépôt international:
**PCT/FR98/01807**

(87) Numéro de publication internationale:
**WO 99/009432 (25.02.1999 Gazette 1999/08)**

(54) **DISPOSITIF POUR LA MESURE SPECTROMETRIQUE DANS LE DOMAINE DE LA DETECTION DE PHOTONS GAMMA**

VORRICHTUNG ZUR SPEKTROMETRISCHEN MESSUNG IM GEBIET DER DETEKTION VON GAMMAPHOTONEN

SPECTROMETRY MEASURING DEVICE IN THE FIELD OF PHOTON GAMMA DETECTION

(84) Etats contractants désignés:
**DE FR GB IT**

(30) Priorité:  **14.08.1997  FR 9710392**

(43) Date de publication de la demande:
**31.05.2000   Bulletin 2000/22**

(73) Titulaire: **COMMISSARIAT A L'ENERGIE ATOMIQUE**
**75015 Paris (FR)**

(72) Inventeurs:
 • **VERGER, Loick**
   **F-38000 Grenoble (FR)**
 • **BONNEFOY, Jean-Paul**
   **F-38100 Grenoble (FR)**
 • **ROSTAING, Jean-Pierre**
   **F-38470 Vinay (FR)**

(74) Mandataire: **Brykman, Georges et al**
**c/o BREVATOME**
**3, rue du Docteur Lancereaux**
**75008 Paris (FR)**

(56) Documents cités:
**EP-A- 0 642 038**        **EP-A- 0 763 751**
**FR-A- 2 738 693**        **US-A- 3 792 255**

 • HUBER A C ET AL: "High performance, thermoelectrically cooled X-ray and gamma ray detectors" , APPLICATION OF ACCELERATORS IN RESEARCH AND INDUSTRY '94. THIRTEENTH INTERNATIONAL CONFERENCE, DENTON, TX, USA, 7-10 NOV. 1994 , ISSN 0168-583X, NUCLEAR INSTRUMENTS & METHODS IN PHYSICS RESEARCH, SECTION B (BEAM INTERACTIONS WITH MATERIALS AND ATOMS), MAY 1995, NETHERLANDS, PAGE(S) 665 - 668 XP002065642 cité dans la demande

## Description

Domaine technique et art antérieur

L'invention relève du domaine de la détection de rayonnement γ, le détecteur utilisé étant un semi-conducteur. Elle concerne en outre le domaine des mesures spectrométriques en imagerie γ.

De nombreux types de détecteurs ont été imaginés pour la détection de rayonnement γ. L'emploi de détecteur solide à base de semi-conducteurs a été le principal apport de ces 30 dernières années aux techniques de détection du rayonnement γ.

Les détecteurs à base de semi-conducteurs réalisent directement la conversion en énergie du rayonnement γ dans la matière, sans passer par des étapes intermédiaires, comme l'émission de photons visibles dans le cas des scintillateurs. On s'affranchit ainsi des problèmes de couplage synonymes de perte de rendement. L'énergie nécessaire pour créer une paire électron-trou dans un semi-conducteur est beaucoup plus faible que dans un gaz ou dans un scintillateur (environ 4eV dans les semi-conducteurs, contre 30eV dans les gaz, et 300eV dans les systèmes scintillateur photomultiplicateur). En conséquence, le nombre de charges libres créées par photon détecté est plus important, ce qui permet d'obtenir de meilleures résolutions en énergie, avec un faible bruit. De plus, le numéro atomique et la densité élevés des matériaux semi-conducteurs permettent d'utiliser des volumes de détection nettement inférieurs à ceux des détecteurs à gaz ou des scintillateurs, tout en conservant la même efficacité quantique de détection.

L'utilisation de ces matériaux semi-conducteurs comme détecteurs de rayonnement X ou γ implique le dépôt de deux contacts électriques à la surface du matériau, aux bornes desquels une tension de polarisation est appliquée. Les porteurs de charges, c'est-à-dire les paires électron-trou créées par l'interaction du photon γ avec le matériau, vont se séparer sous l'action du champ électrique, les électrons migrant vers l'électrode positive et les trous vers l'électrode négative. L'aptitude de ces porteurs de charge à migrer vers les électrodes sans se faire piéger par des défauts présents dans le matériau semi-conducteur conditionnera la résolution en énergie du spectre mesuré. Cette aptitude, appelée aussi propriété de transport des porteurs de charge, est mesurée par la mobilité et la durée de vie des électrons et des trous.

La mesure spectrométrique de photons incidents consiste à détecter le maximum de photons dans le volume du détecteur, ce qui nécessite une forte épaisseur pour une meilleure efficacité quantique de détection, et à mesurer avec précision l'énergie déposée par le photon, ce qui nécessite un excellent rendement de collection des trous et électrons migrant respectivement vers l'électrode négative et positive. Ces deux paramètres (efficacité quantique de détection et efficacité de collection des porteurs de charge) sont antinomiques puisque le premier est proportionnel et le second inversement proportionnel à l'épaisseur du détecteur.

L'efficacité quantique de détection peut être améliorée en optimisant l'épaisseur du détecteur, par rapport au domaine d'application, car elle ne dépend que de la densité et du numéro atomique du détecteur (pour une énergie donnée des photons incidents).

Par contre, les performances des détecteurs γ actuels sont limités par la présence de défauts natifs dans les semi-conducteurs qui, en piégeant les porteurs de charge durant leur migration vers les électrodes, diminuent leur durée de vie et ainsi détériorent la résolution en énergie du détecteur. Ces défauts natifs apparaissent systématiquement durant la cristallogénèse du matériau semi-conducteur. La bibliographie portant sur l'étude de ces défauts est abondante et elle montre que la cristallogénèse de tous les semi-conducteurs de haute résistivité pouvant fonctionner à température ambiante n'est pas maîtrisée au point de supprimer ces défauts.

L'efficacité de collection des porteurs de charge (trous et électrons) peut être améliorée selon différentes méthodes, présentées dans le document EP-763 751.

Ce document présente également un procédé pour la correction de la mesure spectrométrique dans le domaine de la détection de photons γ.

Ce procédé consiste à mesurer, non pas l'amplitude totale du signal total intégré (électron + trou) en fonction de son temps de montée (méthode dite de correction "trou", décrite dans FR-2 738 693), mais à mesurer l'amplitude de la contribution électronique seule en fonction de son seul temps de montée (méthode dite de correction "électron"). La mesure, et par conséquent la connaissance mathématique, de la fonction corrélant l'amplitude du signal électron et son temps de montée, permet de corriger l'amplitude mesurée associée à l'interaction de chaque photon dans tout le volume du détecteur.

L'avantage de la correction "électron" est que la relation existant entre l'amplitude du signal électron et son temps de montée ne dépend que de la mobilité des électrons qui varie peu sur tout un lingot et d'un lingot à l'autre : la mobilité dépend principalement du réseau cristallin. Par contre, la correction "trous" dépend de la durée de vie des trous dont les variations sur un même lingot peuvent être importantes. En effet, cette durée de vie est imposée par les différents défauts créés lors de la cristallogénèse, qui est mal maîtrisée. Une conséquence de ces différences est que la correction "électron" peut corriger les mesures dans la plupart des matériaux semi-conducteurs, ce qui n'est pas le cas de la correction "trou".

Les deux documents cités ci-dessus exposent l'un et l'autre un dispositif pour réaliser ou pour corriger des mesures spectrométriques.

Dans les deux cas, on utilise un préamplificateur classique juste en sortie du détecteur, puis une électronique spécifique pour mesurer l'amplitude du signal (composante électronique dans EP-763 751 et signal global dans FR-2 738 693) et son temps de montée.

Dans les deux cas, le signal est mesuré à l'aide d'un préamplificateur de charge classique acheté dans le commerce et connu de l'homme de l'art (exemple : préamplificateur 5093 acheté chez eV-Products).

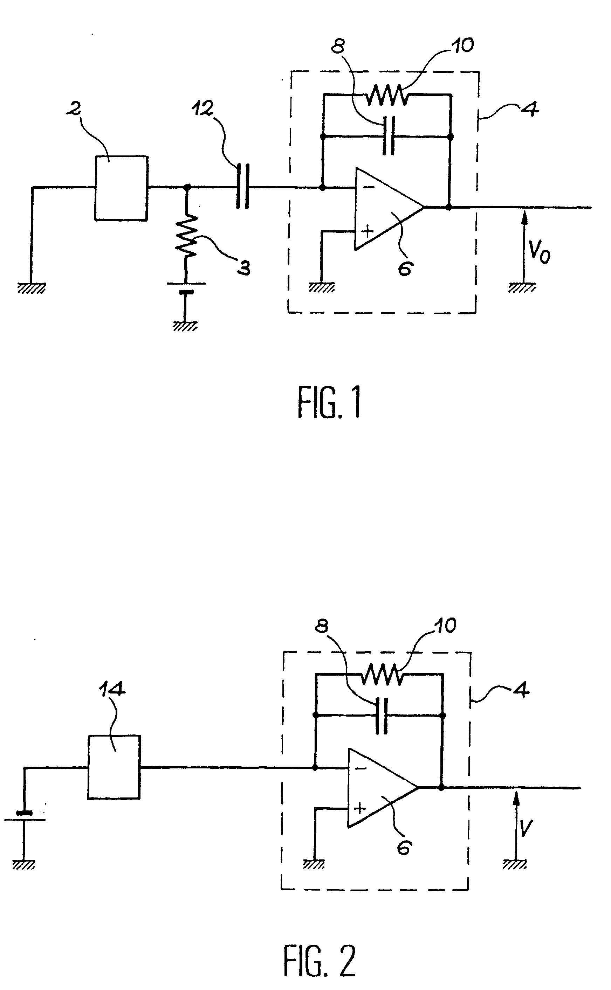

La figure 1 représente schématiquement un détecteur 2, par exemple CdTe, et son préamplificateur 4.

La charge, déposée par le photon absorbé par le détecteur 2, est intégrée aux bornes d'une capacité $C_i$ 8 dite "d'intégration". Cette capacité est en contre réaction avec une résistance $R_i$ 10 (par l'utilisation d'un préamplificateur opérationnel) qui permet de "décharger" la charge intégrée aux bornes de la capacité. C'est en fonction de la nature du semi-conducteur et de la charge à mesurer que la constante de temps $R_i$, $C_i$ peut être adaptée.

Dans tous les cas, le courant d'obscurité associé au détecteur n'est pas mesuré et donc intégré aux bornes de la capacité $C_i$, sa valeur absolue étant encore beaucoup trop élevée. En effet, elle est supérieure à la charge déposée par le photon interagissant dans le détecteur. Elle dépend de la résistivité du semi-conducteur mais aussi de la tension de polarisation appliquée aux bornes du détecteur. Or, la tension de polarisation doit être suffisante pour collecter les charges déposées par chaque photon et ainsi mesurer leur énergie. Les faibles propriétés de transport des charges (mobilité et durée de vie) nécessitent des tensions de polarisation (entre 100 et 500 volts selon l'épaisseur du détecteur) pour lesquelles le courant d'obscurité reste élevé. Par conséquent, une capacité 12 dite de "découplage" est insérée entre le détecteur et la capacité. Cette capacité 12 supprime la composante continue du courant d'obscurité et seuls les impulsions transitoires correspondant aux différentes interactions des photons dans le détecteur, sont prises en compte. Ce principe de mesure est aujourd'hui la seule configuration possible du point de vue "électronique" autorisant la mesure de la charge déposée sans que celle-ci soit "noyée" par le courant d'obscurité.

Malheureusement, cette configuration n'est pas optimale du point de vue électronique, en termes de rapport signal/bruit, car l'introduction de la capacité de "découplage" 12 a l'inconvénient de ramener une « capacité parasite » entre l'entrée du préamplificateur et la masse électrique (référence des tensions). L'effet en sortie du préamplificateur en est une multiplication de la tension de bruit du préamplificateur dans le rapport $\frac{\Sigma C_{in}}{C_i}$, somme des capacités par rapport à la masse sur $C_i$, capacité d'intégration, d'où une augmentation de la composante de bruit produit par le dispositif électronique d'amplification.

La suppression de la capacité de découplage a été réalisée dans une chaîne de spectrométrie classique (A.C. Huber et al. « High Performance, thermo-lectrically cooled X-Ray and Gamma Ray detectors », Invited Paper at the International Conference on the Application of Accelerators in Research and Industry, Denton, Texas, USA, November 1994).

Mais, il est alors nécessaire de refroidir le détecteur CdTe utilisé (à -30°C) afin de diminuer la valeur moyenne du courant d'obscurité. Les performances sont alors bonnes mais il est nécessaire d'utiliser des éléments Peltier pour chaque détecteur. Il en résulte une utilisation difficile, par exemple dans un système d'imagerie constitué de 1600 détecteurs.

Des améliorations aux circuits de traitement des signaux issus du préamplificateur sont décrites dans la demande EP 0 763 751 A1 déjà cité et dans le brevet US-A-3 792 255. Dans ce dernier, un circuit de mise en forme comporte une ligne à retard placé en amont. Un discriminateur et un circuit monostable ne permettent le déclenchement du circuit de mise en forme qu'après que le signal d'entrée ait atteint son niveau maximum.

La demande de brevet EP 0 642 038 A2, décrit l'emploi et l'amélioration d'un cristal CZT de détection ayant une résistivité voisine de $10^{11}$ $\Omega$.cm pour la détection de rayonnements dans des puits de forage, donc à température élevée.

## Exposé de l'invention

L'invention cherche à résoudre ce problème.

Plus particulièrement, l'invention a pour objet un dispositif de détection de rayonnements gamma à base de semi-conducteur, comportant :

- un détecteur à semi-conducteurs, de résistivité supérieure à $10^9 \Omega$.cm,
- un préamplificateur de charge situé directement en sortie du détecteur, sans capacité de découplage ni résistance de polarisation entre le détecteur et le préamplificateur.
- un dispositif pour l'exploitation d'un signal ou d'un ensemble de données représentatives de l'évolution temporelle d'un signal, fourni par ledit détecteur à semi-conducteur en réponse à l'interaction d'un photon $\gamma$ avec le matériau semi-conducteur, ce dispositif comportant des moyens pour produire une donnée représentative, ou un signal représentatif, du temps de montée de la composante électronique du signal total fourni par le détecteur, c'est-à-dire de la composante du signal qui correspond à la collection des électrons provenant de l'interaction de chaque photon $\gamma$ avec le matériau semi-conducteur,
- des moyens pour produire une donnée représentative, ou un signal représentatif, d'une amplitude de la composante électronique du signal ou bien d'une amplitude du signal total.

Avantageusement, le préamplificateur de charge est rapide et à bas bruit.

Un détecteur à semi-conducteur pour l'invention peut être en tellure de cadmium (CdTe ou CdTe:Cl) ou en CdZnTe (par exemple : CdZnTe:Cl) ou en $HgI_2$ ou en $PbI_2$ ou en GaAl ou en PbIn ; ce matériau est tiré par la méthode dite "méthode Brigman haute pression" ("High Pressure Bridgman Method" ou HPBM), et la résistivité obtenue est dix fois supérieure à celle des matériaux CdTe connus jusqu'alors (obtenus par "Traveling Heater Method" ou THM, ou par "Bridgman Method" ou BM), à la température ambiante. Le faible courant de polarisation du détecteur peut alors être écoulé par la résistance de contre-réaction, par la suppression de la capacité de liaison 12 et de la résistance de polarisation 16. On bénéficie ainsi de la disparition de la capacité parasite de la capacité de liaison et donc d'une amélioration du bruit propre de l'électronique associée au détecteur.

L'invention présente d'autres avantages dans le domaine de la détection de photons gamma. En particulier, la suppression de la capacité de découplage et de la résistance de polarisation associée permettent de réduire le nombre de composants associés à chaque détecteur, ce qui, dans le cas d'une structure matricielle, facilite la réalisation de l'électronique intégrée (dans le cas d'une réalisation de type ASIC), et limite son coût. Par ailleurs, il est possible d'utiliser une faible tension de polarisation aux bornes du détecteur, tout en maintenant d'excellentes performances de détection : ceci permet de limiter le courant d'obscurité, donc le vieillissement du détecteur, ainsi que le bruit associé à la mesure de la charge intégrée.

L'utilisation de la méthode de correction du procédé d'exploitation tel que décrit dans le document EP-763 751 (méthode de correction "électron") permet d'améliorer très nettement, à température ambiante, les performances d'un détecteur à base de semi-conducteur, en termes de résolution en énergie et d'efficacité de détection. La combinaison de cette méthode avec l'utilisation d'un détecteur de résistivité supérieure à $10^9$ $\Omega$.cm, conformément à l'invention, permet de maintenir ces excellentes performances de détecteurs, tout en utilisant une très faible tension de polarisation aux bornes des électrodes déposées de part et d'autre des faces du détecteur. La très forte résistivité du détecteur utilisé, et l'utilisation de la méthode de correction électron » permettant d'améliorer les performances associées à la méthode de correction "électron", en supprimant la capacité de découplage à température ambiante.

L'association du détecteur à forte résistivité, à la méthode de correction "électron" permet de réduire considérablement le courant d'obscurité, en valeur moyenne, ainsi que le bruit associé. L'obtention d'un très faible courant d'obscurité permet de supprimer la capacité de découplage et ainsi d'améliorer le bruit associé à la mesure.

L'invention concerne également une gamma-caméra comportant un nombre N de détecteurs fonctionnant à température ambiante, de petite dimension, chaque détecteur étant du type décrit ci-dessus. On obtient donc un dispositif d'imagerie gamma à performances améliorées, notamment en terme de résolution en énergie et de contraste d'image. Par ailleurs, les coûts de réalisation sont réduits, par suppression de deux composants électroniques, la capacité de découplage et la résistance de polarisation de chaque détecteur.

L'invention a également pour objet un procédé de détection de rayonnement gamma mettant en oeuvre le dispositif exposé ci-dessus.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- La figure 1 représente un dispositif selon l'art antérieur.
- La figure 2 représente schématiquement un dispositif selon l'invention.
- La figure 3 représente un dispositif pour la correction de mesures spectrométriques dans le domaine de la détection de photons $\gamma$.
- La figure 4A et 4B représentent des résultats de calibrage d'une chaîne de mesure biparamétrique.
- La figure 5 représente un spectre en amplitude d'un dispositif de l'art antérieur, avec capacité de découplage.
- La figure 6 représente un spectre en amplitude d'un dispositif selon l'invention, sans capacité de découplage.

Exposé détaillé de modes de réalisation de l'invention

La figure 2 représente une réalisation d'un dispositif conforme à l'invention.

Un détecteur à semi-conducteur 14, de haute résistivité (supérieure à $10^9\Omega$.cm) est relié à un préamplificateur 4, composé d'un amplificateur opérationnel 6 et d'une capacité d'intégration 8. La capacité est en contre-réaction ainsi qu'une résistance 10 qui permet de décharger la charge intégrée à ses bornes. Le détecteur est par exemple un détecteur à base de tellure de cadmium (CdTe ou CdZnTe) ou un détecteur à base de $HgI_2$ ou de $PbI_2$. Les matériaux constitutifs de ce détecteur sont obtenus par exemple par méthode HPBM : une telle méthode permet d'obtenir des matériaux dont la résistivité est dix fois supérieure à celle des matériaux connus habituellement utilisés en spectrométrie $\gamma$ (détecteurs fonctionnant à température ambiante).

Selon un autre critère, on choisit un matériau pour lequel le produit de la mobilité des électrons par leur durée de vie est supérieur à $10^{-4}$ $cm^2$/volt.

Selon l'invention, un tel détecteur permet d'éviter l'introduction d'une capacité de découplage entre le détecteur 14 et préamplificateur 4.

De préférence, le détecteur a une épaisseur comprise entre 3 et 6 mm, et fonctionne avec des tensions appliquées entre ses deux électrodes comprises entre 100 et 500 volts.

De manière avantageuse, ce détecteur peut être exploité à température ambiante par un procédé et un dispositif de correction de mesures spectrométriques dans le domaine de la détection de photons γ, du type de celui décrit dans le document EP-763 751

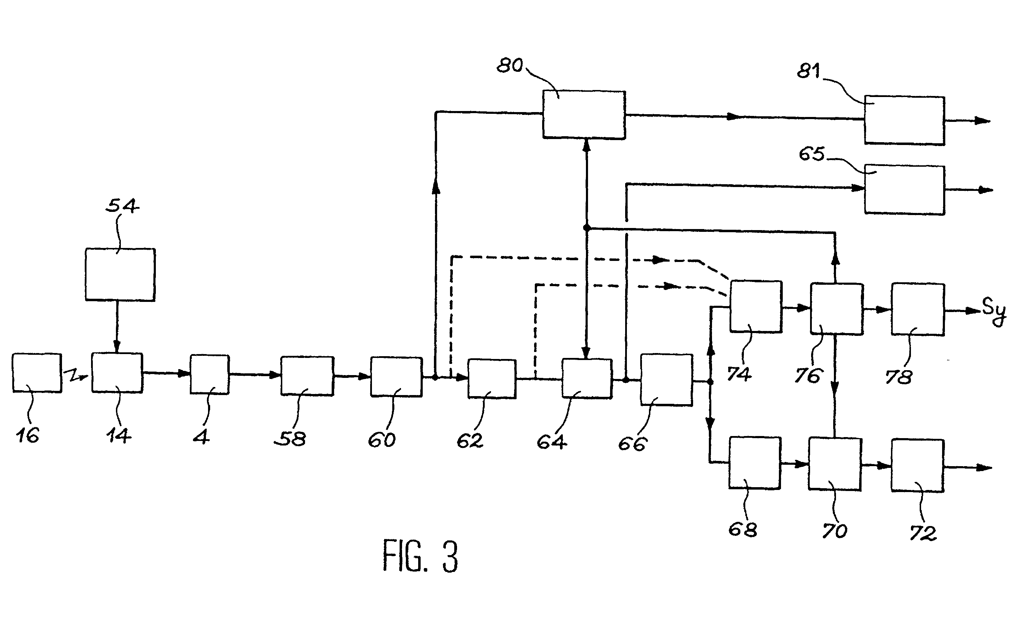

Un tel dispositif va être brièvement rappelé en liaison avec la figure 3.

Sur cette figure, la référence 16 désigne une source de rayonnement qui émet des photons γ en direction d'un détecteur 14, à semi-conducteur, du type décrit ci-dessus.

Des moyens 54 sont par ailleurs prévus qui permettent de choisir la polarisation du détecteur.

En réponse à l'interaction d'un photon γ avec le matériau semi-conducteur du détecteur 14, des charges sont collectées. Le signal correspondant aux charges collectées est disponible en sortie du préamplificateur de charges 4 (par exemple un préamplificateur eV 5093).

Le signal de sortie du préamplificateur de charges 4 est transmis à un préamplificateur de lecture 58, dont le gain peut par exemple être réglé entre 1 et 3. Des moyens peuvent en outre être prévus pour ajustez la polarité du signal. Les moyens 60 combinent un amplificateur et un filtre passe-haut. Le filtre passe-haut permet de rejeter toute composante continue.

Le signal amplifié et filtré attaque ensuite un filtre passe-haut 62. Ce filtre permet de rejeter le signal lent, c'est-à-dire la composante lente du signal qui est due aux trous. En sortie, est donc obtenu un signal qui correspond à la composante électronique du signal total.

La constante de temps du filtre passe-haut 62 est choisie très petite devant le temps collection des trous et supérieure ou égale ou comparable au temps de collection des électrons.

Un signal représentatif de l'évolution temporelle de la seule composante électronique est donc transmis à un détecteur de crête 64 à la sortie duquel est relié un discriminateur 66 de montée vers la crête du signal. Pour ce dernier élément, un transistor, par exemple un transistor 2N 2894, charge un condensateur jusqu'au niveau crête du signal. En sortie, une tension est observée, indiquant que le transistor charge le condensateur. Dès le passage de la crête du signal, la charge est arrêtée et la tension collecteur s'annule.

Le signal obtenu en sortie du discriminateur 66 est transmis à des moyens 68 qui permettent de déterminer l'instant de fin de montée $t_1$ de la composante électronique du signal total. La tension collecteur du transistor du discriminateur 66 est appliquée à un comparateur. Par conséquent, pendant la charge, c'est-à-dire pendant la montée de la composante électronique, un courant d'environ 2 milliampères est fourni en entrée d'un intégrateur 70, dont la capacité d'intégration est sélectionnée en même temps que la constante du filtre passe-haut 62. Des signaux logiques contrôlent la phase d'intégration. Un amplificateur-adaptateur 72 suit l'intégrateur et fournit un signal, ou une tension, proportionnel au temps de migration rapide qui est une bonne approximation du temps de collection des électrons, c'est-à-dire du temps de montée de la composante électronique.

Le signal de sortie du discriminateur 66 ou le signal préamplifié et filtré, prélevé en sortie des moyens 60 ou 62, sert également à déclencher des moyens 74 de détection du seuil du début de montée du signal. Pour cela, le signal préamplifié et filtré est comparé à un seuil bas. Le franchissement de ce seuil bas provoque la transmission d'un signal en sortie des moyens 74 vers des moyens 76 de déclenchement d'une séquence d'intégration dans le temps et de remise à zéro de l'intégrateur 70 en fin de séquence. De même, ces moyens 76 transmettent au détecteur crête 64 un signal de remise à zéro en fin de séquence. Un adaptateur 78 en sortie des moyens 76 permet de générer un signal Sy de synchronisation.

Le détecteur crête 80 prélève un signal en sortie de l'ensemble amplificateur-filtre passe-haut 60. Ce détecteur de crête 80 peut être constitué de manière similaire au détecteur 64. En sortie de chacun de ces détecteurs 64, 80 un adaptateur 65, 81 permet d'obtenir un signal représentatif de l'amplitude, c'est-à-dire de la charge, de la composante électronique du signal total, ou du signal total lui-même (composante électronique + composante trou).

Comme expliqué dans le document EP-763 751, l'information portant sur le temps de montée de la composante électronique et l'information portant sur l'amplitude, ou la charge, de la composante électronique du signal total, ou du signal total lui-même, peut être exploitée en produisant un signal représentatif, ou une donnée représentative, de la charge maximale $Q_m$, ou de l'amplitude maximale du signal total, qui aurait du être détecté si le signal fonctionnait sans pertes.

Des données de corrélations peuvent être préalablement établies à l'aide d'un réseau de courbes. Chaque mesure d'un couple de données (temps de montée, amplitude ou charge de la composante électronique ou du signal total) peut alors être comparée à un tel réseau de courbes.

On peut également, au lieu d'un réseau de courbes, mémoriser toutes les données relatives aux corrélations (courbe, énergie) dans des moyens de mémorisation, par exemple dans un ordinateur conventionnel. L'attribution d'une mesure ($Q_m$, $\tau_m$) à une courbe et à une énergie donnée peut ensuite être réalisée par des moyens informatiques, par exemple à l'aide du même ordinateur spécialement programmé à cet effet. Des moyens d'affichage des données, sous forme graphique par exemple, peuvent également être prévus.

Il est ensuite possible d'effectuer une correction, soit par une électronique dédiée, soit par informatique. Quel que soit le cas de figure, le principe consiste donc à mesurer le temps de montée du signal, son amplitude, et obtenir l'amplitude maximale qui aurait due être mesurée grâce à la connaissance de la relation, ou de la corrélation, entre les charges mesurées et les temps de montée.

Ainsi, si la corrélation établie est linéaire, la charge $Q_c$ obtenue par correction est donnée par la relation :

$$Q_c = Q_m \times \tau_0/\tau_m,$$

où $Q_m$ représente la charge mesurée, $\tau_m$ le temps de montée mesuré de la composante électronique et $\tau_0$ le temps de montée associé à la charge $Q_0$ maximale, obtenue après comparaison du couple $(\tau_m, Q_m)$ de mesure avec les relations ou corrélations préalablement établies.

Tout ceci vaut aussi bien pour un matériau semi-conducteur ou seul le signal électronique subsiste, que pour un matériau semi-conducteur pour lequel le signal trou existe, si petit fut-il. Dans ce dernier cas, le signal comporte d'une part une composante électronique qui correspond à la collection des électrons, et d'autre part une composante trou qui correspond à la collection des trous. La composante électronique peut être isolée ou identifiée par différenciation temporelle ou filtrage. On peut ainsi se retrouver dans le cas où seul le signal électronique existe : on identifie l'amplitude du signal mesuré $Q_m$ et le temps de montée mesurée $\tau_m$, de la composante électronique, et on compare ces résultats avec les corrélations.

On peut également, afin de disposer d'un rapport signal/bruit plus important, mesurer l'amplitude du signal total (composante électronique plus composante trou), le temps de montée de la composante électronique, et comparer ces données avec une corrélation préalablement établie entre l'amplitude totale de signaux et les temps de montée des composantes électroniques de ces signaux. Dans ce cas, les corrélations peuvent ne plus être linéaires mais, comme on l'a dit, le rapport signal/bruit est plus important. On obtient ainsi la charge totale maximale qui aurait due être mesurée si l'interaction s'était produite au voisinage de la cathode.

D'autres informations et exemples sur le procédé de traitement des données sont fournis dans le document EP-763 751.

Un moyen classique d'exploiter le signal issu d'un détecteur solide type CdTe, activé par un photon, est le préamplificateur de charges 6 (figure 1).

Le préamplificateur de charges est constitué (figure 1) d'un amplificateur A, d'une capacité de contre-réaction (ou d'intégration) 8 (Ci) et d'une résistance de contre-réaction 10 (Ri), destinée à fixer le point de repos du circuit.

Fonctionnant en intégrateur, le préamplificateur de charges fournit une tension V proportionnelle à la charge Q reçue : V = Q/Ci.

L'amplificateur 6 présente, entre autres :

- un gain G (le plus grand possible)
- une tension et un courant de bruit (1 plus faible possible).

Vis-à-vis du bruit, l'impédance de la source détermine le choix de la technologie utilisée.

Un moyen classique de polariser le détecteur est de lui placer en série une résistance 3 (Rp) dans le circuit de polarisation, ici une source de haute-tension.

Le courant du détecteur, en l'absence de signal, dit d'obscurité, noté Ip, n'est pas nul et est généralement variable avec la fabrication, la température, etc.

La résistance est de valeur élevée (typiquement supérieure à 50 megohm dans l'application présentée), pour que son courant de bruit soit négligeable devant celui du détecteur.

Il en résulte une différence de potentiel UO = Rpxlp aux bornes de la résistance, toute aussi variable.

Une capacité de liaison 12 (Cl), "coupe" cette composante continue et ne laisse passer que les variations rapides de courant, en particulier celles produites par le signal utile dû à l'interaction du photon dans le matériau semi-conducteur.

On notera que tous les composants - résistance, capacité, amplificateur, etc. - ont une capacité par rapport à la masse commune d'alimentation constituant la référence des potentiels. Cette capacité, dite parasite, notée Cpar, a ici un effet multiplicateur, par $\Sigma(Cpar)/Cf$, de la tension de bruit Eea du préamplificateur.

Pour des raisons d'augmentation des performances par diminution du bruit et/ou économiques (réduction des coûts) on peut souhaiter réduire le nombre de composants.

On supprime la capacité de liaison Cl et on confond ainsi la polarisation du détecteur avec la contre-réaction du préamplificateur dans le même composant, la résistance 10 Ri (figure 2).

La constante de temps Ti = RixCi fixe le domaine fréquentiel d'intégration (d'utilisation) du circuit. Elle est donc en relation avec l'aspect temporel du signal à traiter : en l'occurrence, le temps de transit des électrons, note te, dans le matériau semi-conducteur : Ti >> te max (par exemple : Ti > 10 te max). te max est le temps de transit maximal des électrons. Pour un détecteur donné, il est déterminé une fois que la tension V appliquée aux bornes de celui-ci est fixée. Il correspond, en fait, au cas où le point d'impact est situé sur la cathode ou proche de celle-ci.

De préférence, on cherche, par ailleurs, à ne pas saturer l'amplificateur 6. La sortie et l'entrée du préamplificateur sont donc de préférence comprises entre 0 (la masse) et VDD. Pour cela, on cherche à obtenir : RI x Ip < VDD, où VDD est la tension d'alimentation du préamplificateur (par exemple : Ri x Ip $\frac{1}{2}$ VDD ou $\frac{1}{3}$ VDD ou Ri Ip << VDD). Le produit Ri Ip dépend donc alors de la tension d'alimentation VDD de l'amplificateur 6.

D'une manière générale, un procédé de fonctionnement d'un dispositif de détection selon l'invention, le détecteur étant placé sous une tension déterminée (donc avec un te max déterminé) et l'amplificateur étant alimenté par une tension VDD, sera tel que : Ti >> te max, et/ou Ri Ip < VDD.

Enfin, si on souhaite, de plus, l'obtention d'un rapport signal sur bruit grand ou maximum, on est conduit à choisir les valeurs de Ci la plus petite possible et de Ri la plus grande possible.

Les caractéristiques du détecteur (te max, Ip) peuvent être telles que l'ensemble de ces contraintes a une solution réalisable :

*   Ti=RixCi >> te max ($\approx$ 1µs), compatible avec le domaine d'intégration lié au parcours des électrons,
*   rapport signal/bruit grand => Ci < 0.5pF ; Ri > 50Mohm
*   RixIp << VDD <=> Ip << VDD/Ri = $5/(5x10^7)$ =100nA, ce qui permet de ne pas saturer l'amplificateur (par exemple : Ip = 20nA ou Ip $\simeq$ 20nA).

Ces conditions expriment la compatibilité avec le détecteur.

Compte tenu des valeurs très faibles de capacité rencontrées, on conçoit l'intérêt qu'apporte la miniaturisation des composants. L'obtention de telles valeurs, très difficile en électronique entièrement discrète, possible puisqu'existante en électronique hybride, est tout à fait réalisable en électronique intégrée.

De tels circuits ont été réalisés en technologie CMOS 0,8µm.

Des mesures comparatives ont été effectuées sur des spectres biparamétriques et des spectres d'amplitude, pour un dispositif de l'art antérieur (avec capacité de découplage) et un dispositif selon l'invention (en l'absence de capacité de découplage).

Pour le dispositif de l'art antérieur, les résultats ont été obtenus dans les conditions suivantes :

*   source cobalt 57 DP343 (3,2 MBq le 17/11/93), avec 83% des photons émis à 122 KeV,
*   collimateur tungstène ($\phi$ 2,5 mm),
*   détecteur CdZnTe 5x5x5 mm$^3$ acheté à eV-Products n°eV-01100 qualité spectrométrique,
*   tension de polarisation : 250 volts,
*   connectique et distance détecteur-capacité de liaison optimisés,
*   préamplificateur n°eV-5093 avec capacité de liaison,
*   amplificateur 2ème tiroir,
*   programme d'acquisition et de correction développés sur labview.

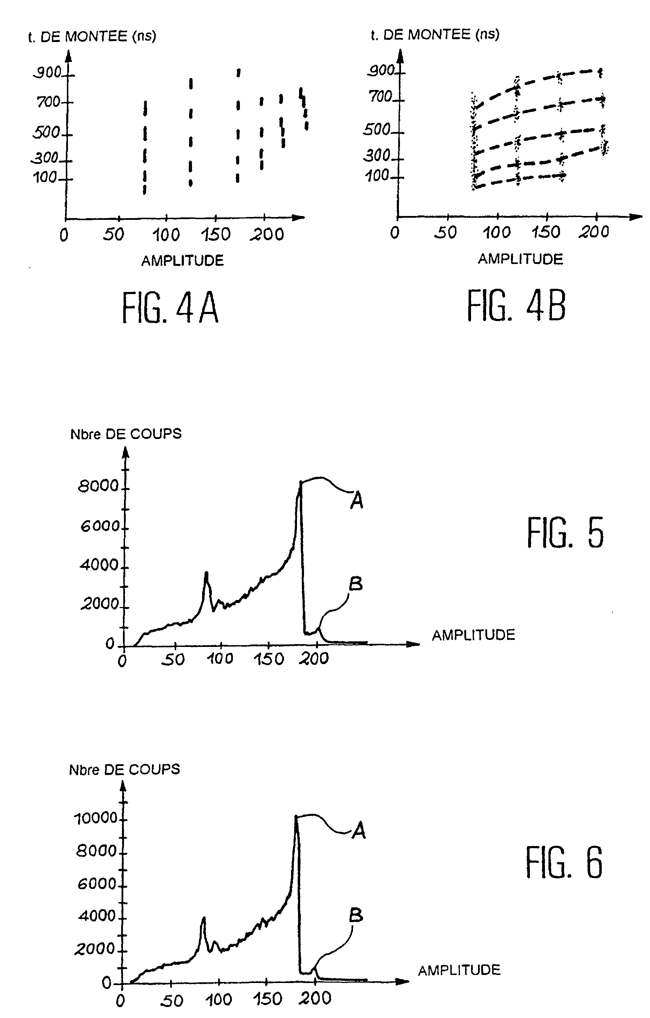

Les figures 4A et 4B présentent les résultats obtenus dans les mêmes conditions en injectant via un générateur d'impulsion un signal calibré en amplitude (gain élevé) et en temps sur une petite capacité simulant le détecteur. Cette mesure permet de calibrer en amplitude et en temps la chaîne d'acquisition et d'identifier ses éventuelles non linéarité afin de déconvoluer l'influence du détecteur et de la chaîne électronique sur la qualité de la mesure. On observe que des temps de 100 ns à 1 µs sont mesurables pour des amplitudes correspondant à 122 KeV. Le bruit associé à la mesure est faible pour l'amplificateur seul (figure 4A) et beaucoup plus élevé pour l'amplificateur + le préamplificateur (figure 4B).

Un spectre en amplitude de l'échantillon eV-01100, dans les conditions ci-dessus, est présentée sur la figure 5.

Sur le spectre biparamétrique amplitude-temps de montée (non représenté), on observe une relation amplitude-temps de montée peu bruitée sur une grande dynamique d'amplitude et de temps. Cette relation est mesurable sur le pic 122 KeV, et surtout sur le pic 136 KeV, ce qui témoigne de la finesse de la mesure et par conséquent de la qualité de l'électronique. La comparaison de la figure 4B et d'un tel spectre démontre que le bruit associé à la mesure de la relation amplitude-temps de montée est en grande partie dû au préamplificateur et non aux fluctuations du détecteur. Cette relation entre l'amplitude et le temps de montée permettra de corriger la mauvaise efficacité de collection des charges et ainsi d'améliorer les performances du détecteur. Les curseurs verticaux espacés de deux fois la largeur à mi-hauteur du pic permettent d'évaluer l'efficacité de détection du pic 122 KeV à environ 25% $\pm$2%. Elle est calculée en effectuant le rapport (nombre de coups entre les deux curseurs)/(nombre de photons incidents calculé à l'aide de l'activité de la source, du collimateur et de la géométrie d'irradiation comprenant le collimateur). Le nombre de photons 122 KeV incidents est donné par le débit de photons incidents à sa surface (Inc. Counts=420 photons/seconde), le pourcentage de photons 122 KeV émis par la source cobalt 57 déduit de ceux qui créent l'échappement (85,7-3=83%) et le temps d'acquisition (900 secondes).

La figure 5 représente le spectre en amplitude. La tension de polarisation a été fixée à 250 volts ce qui dégrade le pic sur vallée (P/V=2 contre P/V=3 à 850 volts) et la résolution en énergie (R=11% contre R=4,5% à 850 volts).

Les mesures présentées ci-dessus ont été réalisées avec une capacité de liaison entre le détecteur et le préamplificateur. Cette capacité permet de s'affranchir de la valeur moyenne du courant d'obscurité.

Selon l'invention, cette capacité et la résistance de polarisation sont supprimées. Le matériau choisi, très résistant (résistivité supérieure à $10^9\Omega$.cm), fonctionne sous une faible tension (comprise par exemple entre 100 et 500 V), à température ambiante.

L'avantage d'imposer une faible tension de polarisation est d'augmenter le temps de transit des électrons, ce qui permet de mesurer des temps de montée plus longs avec un faible bruit. Cela reste possible tant que les électrons créés sous la cathode (et responsables en grande partie du pic 122 KeV) migrent sur toute l'épaisseur du détecteur, c'est-à-dire tant que le canal du pic 122 KeV reste constant. Un compromis est donc à trouver entre l'efficacité de collection des électrons créés sous la cathode et l'aptitude de l'électronique à mesurer les faibles temps de montée des électrons très près de l'anode. Ce compromis dépend de l'épaisseur des détecteurs et de la tension de polarisation appliquée. L'autre avantage de travailler à faible tension de polarisation est d'obtenir un très faible courant d'obscurité (10 nA à 100 nA) d'où un vieillissement moins rapide du détecteur et une diminution du bruit du détecteur.

Outre le fait d'augmenter les temps de transit des électrons, ce qui facilite la mesure du temps de montée associé à de faibles amplitudes, l'utilisation d'une faible tension de polarisation (250 volts sur une épaisseur de 5 mm) présente d'autres avantages :

- le détecteur vieillit moins vite,
- les risques de claquages sont limités,
- le bruit associé au courant d'obscurité est plus faible et constant dans le temps.

La figure 6 montre que, dans un dispositif selon l'invention, le courant d'obscurité est suffisamment faible pour ne pas saturer le préamplificateur associé au détecteur. Les résultats ont été obtenus avec un système identique à celui déjà décrit ci-dessus, mais sans capacité de découplage.

Les résultats montrent une nette amélioration de la résolution en énergie : R=7% sans capacité (figure 6) contre R=11% avec capacité (figure 5). La suppression de cette capacité de liaison a permis d'améliorer le bruit associé au signal détecteur, ce qui améliore la finesse de la relation amplitude-temps de montée (figure 6, sans capacité, à comparer avec la figure 5, avec capacité).

Les avantages du dispositif selon l'invention sont, entre autres, ceux déjà cités ci-dessus (limitation du vieillissement, des risques de claquage, et du bruit des courants à l'obscurité).

De plus, on constate de meilleures performances (réduction du bruit de mesure) pour un plus faible coût (l'implantation d'une capacité et d'une résistance est coûteuse).

Avant toute correction, un détecteur CdZnTe, commercialisé par eV-Products, de qualité spectrométrique de 5 mm d'épaisseur présente une efficacité de détection de 26% ±5% et une résolution en énergie de 5% à 122 KeV.

La méthode de correction proposée est basée sur la mesure de la contribution électronique au signal, les électrons ayant des propriétés de transport bien supérieures à celle des trous. Elle est décrite dans le document EP-763 751.

Cette méthode consiste à mesurer la relation entre l'amplitude et le temps de montée de la composante des électrons du signal intégré. Cette relation est quasi-linéaire et présente l'avantage de ne dépendre que de la mobilité des électrons qui varie très peu le long d'un lingot, et d'un lingot à l'autre. Cela permet d'améliorer le rendement des détecteurs pouvant être corrigés, donc utilisables, pour une gamma-caméra.

Cette méthode de correction est d'autant plus efficace que l'épaisseur du détecteur est plus élevée et la tension de polarisation plus faible ; cela permet d'augmenter les temps de transit des électrons et d'améliorer ainsi le bruit associé à leur mesure. La suppression de la capacité de liaison détecteur-préamplificateur de charges améliore les performances de la méthode de correction par une diminution du bruit de mesure.

Selon un autre aspect de l'invention, une gamma-caméra peut être réalisée. Par exemple, on peut réaliser une caméra 20x20cm$^2$, à base de tellure de cadmium, issu de la méthode de croissance HPBM, et utilisant la méthode de correction décrite ci-dessus. On peut juxtaposer environ 1600 détecteurs, avec des dimensions proches de 4x4x6 mm$^3$. Un tel dispositif d'imagerie en rayonnement gamma implique la réalisation d'une électronique intégrée utilisant la technologie ASIC associée à un groupe de détecteurs (4 ou 16 détecteurs). Cette électronique peut comporter des moyens de réalisation de la méthode de correction décrite dans le document EP-763 751. La présente invention (fonctionnement de détecteurs à haute résistivité, sans capacité de découplage) permet d'améliorer les performances du dispositif d'imagerie, en terme de résolution en énergie, donc de contraste de l'image, et permet également de réduire ses coûts de réalisation, du fait de la suppression de deux composants électroniques (capacité de découplage et résistance de polarisation).

**Revendications**

1. Dispositif de détection de rayonnements gamma à base de semi-conducteurs, comportant :

   - un détecteur (14) à semi-conducteur,
   - un préamplificateur (4) opérationnel couplé au détecteur,
   - un dispositif pour l'exploitation d'un signal ou d'une pluralité de signaux ou encore d'un ensemble de données ou d'une pluralité d'ensemble de données représentatives de l'évolution temporelle d'un signal, fourni par ledit détecteur (14) à semi-conducteur en réponse à l'interaction d'un photon γ avec le matériau semi-conducteur, ce dispositif comportant,

- des moyens (58,60,62,64,66,68,70,72) pour produire une donnée représentative, ou un signal représentatif, du temps de montée de la composante électronique du signal total fourni par le détecteur, c'est-à-dire de la composante du signal qui correspond à la collection des électrons provenant de l'interaction de chaque photon γ avec le matériau semi-conducteur, et

- des moyens (65,81) pour produire une donnée représentative, ou un signal représentatif, d'une amplitude de la composante électronique du signal ou bien d'une amplitude du signal total. dispositif **caractérisé en ce que**

- le semi-conducteur du détecteur a une résistivité supérieure à $10^9 \Omega.cm$,

- le préamplificateur (4) est situé directement en sortie du détecteur (14), sans capacité de découplage entre le détecteur (14) et le préamplificateur (4).

2. Dispositif selon la revendication 1, **caractérisé en ce que** le dispositif pour l'exploitation d'un signal ou d'une pluralité de signaux ou encore d'un ensemble de données ou d'une pluralité d'ensemble de données chacun étant représentatif de l'évolution temporelle d'un signal fourni par le détecteur (14) à semi-conducteur, comporte en outre des moyens (65,81) pour produire une donnée représentative, ou un signal représentatif, soit de la charge totale détectée, soit de la partie de la charge totale résultant de la collection des électrons.

3. Dispositif selon la revendication 1, **caractérisé en ce que** le dispositif pour l'exploitation d'un signal ou d'une pluralité de signaux ou encore d'un ensemble de données ou d'une pluralité d'ensemble de données chacun étant représentatif de l'évolution temporelle d'un signal fourni par le détecteur (14) à semi-conducteur, comporte en outre des moyens pour produire un signal représentatif, ou une donnée représentative de la charge électrique maximale ou de la charge maximale correspondant à au moins une partie d'un premier ensemble de données représentant les temps de montée des composantes électroniques et, d'autre part, un second ensemble de données représentant les charges totales détectées ou les charges résultant de la collection des électrons et des moyens permettant d'établir une relation, ou corrélation, entre le premier et le second ensembles de données.

4. Dispositif selon la revendication 3, **caractérisé en ce que** les moyens pour déterminer une charge électrique maximale le font à partir :

* des signaux ou des données sur :

• le temps de montée de la composante électronique de signal,
• la charge totale détectée ou la partie de la charge totale résultant de la collection des électrons

* et à partir de la relation, ou corrélation, entre, d'une part, le premier ensemble de données et, d'autre part, le second ensemble de données.

5. Dispositif selon la revendication 4, comportant en outre des moyens pour corriger la charge mesurée à partir de la charge maximale, du temps de montée correspondant à cette charge maximale, et du temps de montée effectivement mesuré.

6. Dispositif selon l'une des revendications 1 à 5, le produit de la mobilité des électrons dans le semi-conducteur par leur durée de vie étant supérieur à $10^{-4}$ cm$^2$/V.

7. Dispositif selon l'une des revendications 1 ou 6, le détecteur étant en CdTe ou CdTe : Cl ou CdZnTe : Cl ou CdTeSe :Cl ou CdZnTe ou HgI$_2$ ou PbI$_2$ ou GaAs ou PbIn.

8. Dispositif selon l'une des revendications 1 à 7, le matériau constitutif du semi-conducteur étant obtenu par la méthode HPBM.

9. Dispositif selon l'une des revendications 1 à 8, le détecteur ayant une épaisseur comprise entre 3 mm et 6 mm.

10. Procédé de détection de rayonnement gamma, mettant en oeuvre à température ambiante, un dispositif selon l'une des revendications 1 ou 2 ainsi qu'une étape d'exploitation d'un signal, ou d'un ensemble de données représentatives de l'évolution temporelle d'un signal, fourni par le détecteur (14) à semi-conducteur, en réponse à l'interaction d'un photon γ avec le matériau semi-conducteur, dans lequel est produit un signal représentatif, ou une donnée représentative, du temps de montée de la composante électronique du signal fourni par le détecteur, c'est-à-dire de la composante du signal total qui correspond à la collection des électrons provenant de l'interaction de chaque photon γ avec le matériau semi-conducteur.

11. Procédé selon la revendication 10, dans lequel est produit(e) en outre une donnée représentative, ou un signal représentatif, soit de la charge totale détectée, soit de la partie de la charge totale résultant de la collection des électrons.

**12.** Procédé selon l'une des revendications 10 ou 11, dans lequel est produit(e) une donnée représentative ou un signal représentatif, ou bien de l'amplitude du signal fourni par le détecteur, ou bien de l'amplitude de la composante électronique du signal fourni par le détecteur.

**13.** Procédé de détection de rayonnement gamma selon la revendication 10, mettant en oeuvre, à température ambiante, un dispositif selon la revendication 3, et comportant en outre l'établissement d'une relation, ou corrélation, entre, d'une part, un premier ensemble de données représentant les temps de montée des composantes électroniques, et, d'autre part, un second ensemble de données représentant ou bien les charges totales détectées, ou bien les parties des charges totales résultant de la collection des électrons.

**14.** Procédé selon la revendication 13, dans lequel est déterminé(e), ou bien est produit(e) une donnée ou un signal représentatif de la charge électronique maximale ou de la charge maximale correspondant à au moins une partie des premier et second ensembles de données.

**15.** Procédé de détection de rayonnement gamma, selon la revendication 11 mettant en oeuvre, à température ambiante, un dispositif selon l'une des revendications 4 ou 5, dans lequel :

- on détermine une charge électrique maximale, à partir :

  * des signaux ou des données sur :

    • le temps de montée de la composante électronique de signal,
    • et sur la charge totale détectée ou sur la partie de la charge totale résultant de la collection des électrons,

  * et à partir d'une relation, ou corrélation, entre, d'une part, un premier ensemble de données représentant les temps de montée des composantes électroniques, et, d'autre part, un second ensemble de données représentant ou bien les charges totales détectées, ou bien les parties des charges totales résultant de la collection des électrons.

**16.** Procédé selon la revendication 15, dans lequel on corrige la charge mesurée à partir :

- de la charge maximale,
- du temps de montée correspondant à cette charge maximale,

- et du temps de montée effectivement mesuré.

**17.** Procédé selon l'une des revendications 10 à 16, la tension appliquée au détecteur étant comprise entre 100 V et 500 V.

**18.** Procédé selon l'une des revendications 10 à 16, le détecteur (14) fonctionnant sous une tension V déterminée, donc ayant un temps de transit maximal des électrons te max déterminé, le préamplificateur (14) étant associé à une capacité de contre-réaction, Ci (8) et à une résistance de contre-réaction Ri (10), Ci et Ri étant tels que :

$$Ti = Ri\ Ci \gg te\ max$$

**19.** Procédé selon l'une des reveneications 10 à 17, le détecteur ayant un courant d'obscurité Ip, le préamplificateur (14) étant associé à une capacité de contre-réaction Ci (8) et à une résistance de contre-réaction Ri (10), le préamplificateur étant alimenté sous une tension VDD, Ri, Ip et VDD étant tels que :

$$Ri\ Ip < VDD$$

**20.** Utilisation à température ambiante d'un dispositif selon l'une des revendications 1 à 9, pour la détection de rayonnement gamma le détecteur (14) fonctionnant sous une tension V déterminée, donc ayant un temps de transit maximal des électrons te max déterminé, le préamplificateur (14) étant associé à une capacité de contre-réaction, Ci (8) et à une résistance de contra-réaction Ri (10), Ci et Ri étant tels que :

$$Ti = Ri\ Ci \gg te\ max$$

**21.** Utilisation à température ambiante d'un dispositif selon l'une des revendications 1 à 9, pour la détection de rayonnement gamma le détecteur ayant un courant d'obscurité Ip, le préamplificateur (14) étant associé à une capacité de contre-réaction Ci (8) et à une résistance de contre- réaction Ri (10), le préamplificateur étant alimenté sous une tension VDD, Ri, Ip et VDD étant tels que :

$$Ri\ Ip < VDD$$

**Patentansprüche**

**1.** Vorrichtung zur Detektion von Gammastrahlung auf Halbleiterbasis, umfassend:

- einen Halbleiter-Detektor (14),
- einen Operations-Vorverstärker (4), gekoppelt mit dem Detektor,
- eine Vorrichtung zum Auswerten eines Signals oder einer Vielzahl von Signalen oder auch einer Gruppe von Daten oder einer Vielzahl von Gruppen von Daten, die repräsentativ sind für die zeitliche Entwicklung eines Signals, geliefert durch den genannten Halbleiter-Detektor (14) als Reaktion auf die Wechselwirkung eines Gammaphotons mit dem Halbleitermaterial, wobei diese Vorrichtung umfasst:

    - Einrichtungen (58, 60, 62, 64, 66, 68, 70, 72) zur Erzeugung einer Größe, oder eines Signals, repräsentativ für die Anstiegszeit der elektronischen Komponente des durch den Detektor gelieferten Gesamtsignals, das heißt der Komponente des Signals, das der Sammlung der Elektronen entspricht, die von der Wechselwirkung jedes Gammaphotons mit dem Halbleitermaterial stammen, und
    - Einrichtungen (65, 81) zum Erzeugen einer repräsentativen Größe, oder eines repräsentativen Signals, einer Amplitude der elektronischen Komponente des Signals oder auch einer Amplitude des Gesamtsignals,

    **dadurch gekennzeichnet,**

    - **dass** der Halbleiter des Detektors eine Resistivität von über $10^9 \Omega.cm$ hat, und
    - **dass** der Vorverstärker (4) sich direkt am Ausgang des Detektors (14) befindet, ohne Entkopplungskapazität zwischen dem Detektor (14) und dem Vorverstärker (4).

2. Vorrichtung nach Anspruch 1, **dadurch gekennzeichnet, dass** die Vorrichtung zur Auswertung eines Signals oder einer Vielzahl von Signalen oder auch einer Datengruppe oder einer Vielzahl von Datengruppen, jede repräsentativ für die zeitliche Entwicklung eines Signals, geliefert durch den genannten Halbleiter-Detektor (14), außerdem Einrichtungen (65, 81) umfasst, um eine repräsentative Größe oder ein repräsentatives Signal entweder der detektierten Gesamtladung oder des Teils der Gesamtladung zu erzeugen, der aus der Sammlung der Elektronen resultiert.

3. Vorrichtung nach Anspruch 1, **dadurch gekennzeichnet, dass** die Vorrichtung zur Auswertung eines Signals oder einer Vielzahl von Signalen oder auch einer Datengruppe oder einer Vielzahl von Datengruppe, jede repräsentativ für die zeitliche Entwicklung eines Signals, geliefert durch den genannten Halbleiter-Detektor (14), außerdem Einrichtungen umfasst, die ein repräsentatives Signal oder eine repräsentative Größe der maximalen elektrischen Ladung oder wenigstens eines Teils einer ersten Gruppe von Daten entsprechende maximale Ladung erzeugen, die die Anstiegszeiten der elektronischen Komponenten darstellen, und außerdem eine zweite Gruppe von Daten, die die detektierten Gesamtladungen oder die aus der Sammlung der Elektronen resultierenden Ladungen darstellen, und Einrichtungen, die ermöglichen, eine Relation, oder Korrelation, zwischen der ersten und der zweiten Datengruppe herzustellen.

4. Vorrichtung nach Anspruch 3, **dadurch gekennzeichnet, dass** die Einrichtungen zum Bestimmen einer maximalen elektrischen Ladung es tun:

    * aufgrund der Signale oder der Daten bezüglich:

        • der Anstiegszeit der elektronischen Komponente des Signals,
        • der detektierten Gesamtladung oder des aus der Sammlung der Elektronen stammenden Teils der Gesamtladung,

    * und aufgrund der Relation, oder Korrellation, zwischen einerseits der ersten Datengruppe und andererseits der zweiten Datengruppe.

5. Vorrichtung nach Anspruch 4, die außerdem Einrichtungen umfasst, um die gemessene Ladung aufgrund der maximalen Ladung, der dieser maximalen Ladung entsprechenden Anstiegszeit und der effektiv gemessenen Anstiegszeit zu korrigieren.

6. Vorrichtung nach einem der Ansprüche 1 bis 5, wobei das Produkt aus der Beweglichkeit der Elektronen in dem Halbleiter mal ihrer Lebensdauer größer als $10^{-4}$ cm$^2$/V ist.

7. Vorrichtung nach einem der Ansprüche 1 oder 6, wobei der Detektor aus CdTe oder CdTe : Cl oder CdZnTe : Cl oder CdTeSe :Cl oder CdZnTe oder $HgI_2$ oder $PbI_2$ oder GaAs oder PbIn ist.

8. Vorrichtung nach einem der Ansprüche 1 oder 7, wobei man das den Halbleiter bildende Material durch die HPBM-Methode erhält.

9. Vorrichtung nach einem der Ansprüche 1 bis 8, wobei der Detektor eine zwischen 3 mm und 6 mm enthaltene Dicke hat.

10. Verfahren zur Detektion von Gammastrahlung, in dem man bei Umgebungstemperatur eine Vorrichtung nach einem der Ansprüche 1 oder 2 benutzt sowie einen Auswertungsschritt eines Signals oder einer Gruppe für die zeitliche Entwicklung eines Signals repräsentativer Daten, geliefert durch den Halbleiter-Detektor (14) als Reaktion auf die Wechselwirkung eines Gammaphotons mit dem Halbleitermaterial, in dem ein repräsentatives Signal oder eine repräsentative Größe der Anstiegszeit der elektronischen Komponente des durch den Detektor gelieferten Signals erzeugt wird, das heißt von der Komponente des Gesamtsignals, die der Sammlung der Elektronen entspricht, die von der Wechselwirkung jedes Gammaphotons mit dem Halbleitermaterial stammen.

**11.** Verfahren nach Anspruch 10, in dem man außerdem eine repräsentative Größe oder ein repräsentatives Signal erzeugt, entweder für die detektierte Gesamtladung oder für den Teil der Gesamtladung, der aus der Sammlung der Elektronen resultiert.

**12.** Verfahren nach Anspruch 10 oder 11, in dem man außerdem eine repräsentative Größe oder ein repräsentatives Signal erzeugt, entweder für die Amplitude des durch den Detektor gelieferten Signals oder für die Amplitude der elektronischen Komponente des durch den Detektor gelieferten Signals.

**13.** Verfahren zur Detektion von Gammastrahlung nach Anspruch 10, in dem bei Umgebungstemperatur eine Vorrichtung nach Anspruch 3 benutzt wird und das außerdem umfasst: eine Relation, oder Korrelation, zwischen einerseits einer ersten Gruppe von Daten, repräsentativ für die Anstiegszeit der elektronischen Komponenten, und andererseits einer zweiten Gruppe von Daten, die entweder die detektierten Gesamtladungen repräsentieren oder die Teile der Gesamtladungen, die aus der Sammlung der Elektronen resultieren.

**14.** Verfahren nach Anspruch 13, in dem man eine Größe oder ein Signal, repräsentativ für die maximale elektronische Ladung oder für die wenigstens einem Teil der ersten und zweiten Datengruppe entsprechende maximale Ladung.

**15.** Verfahren zur Detektion von Gammastrahlung nach Anspruch 11, in dem man bei Umgebungstemperatur eine Vorrichtung nach einem der Ansprüche 4 oder 5 benutzt und eine maximale elektrische Ladung bestimmt:

* aufgrund der Signale oder der Daten bezüglich:

  • der Anstiegszeit der elektronischen Komponente des Signals,
  • der detektierten Gesamtladung oder des aus der Sammlung der Elektronen stammenden Teils der Gesamtladung,

* und aufgrund der Relation, oder Korrelation, zwischen einerseits einer ersten Datengruppe, repräsentativ für die Anstiegszeiten einer elektronischen Komponente, und andererseits einer zweiten Datengruppe, repräsentativ für entweder die detektierten Gesamtladungen oder die Teile der Gesamtladungen, die aus der Sammlung der Elektronen resultieren.

**16.** Verfahren nach Anspruch 15, in dem man die gemessene Ladung korrigiert aufgrund:

- der maximalen Ladung,
- der dieser maximalen Ladung entsprechenden Anstiegszeit,
- und der effektiv gemessenen Anstiegszeit.

**17.** Verfahren nach einem der Ansprüche 10 bis 16, wobei die an den Detektor angelegte Spannung zwischen 100 V und 500 V enthalten ist.

**18.** Verfahren nach einem der Ansprüche 10 bis 16, wobei der Detektor (14) mit einer bestimmten Spannung V betrieben wird, also eine bestimmte maximale Elektronenlaufzeit te max hat, und der Vorverstärker (4) einer Gegen- bzw. Rückkopplungskapazität Ci (8) und einem Gegen- bzw. Rückkopplungswiderstand Ri (10) zugeordnet ist, wobei Ci und Ri so sind, dass:

$$Ti = Ri\,Ci \gg te\ max$$

**19.** Verfahren nach einem der Ansprüche 10 bis 17, wobei der Detektor einen Dunkelstrom Ip hat, der Vorverstärker (4) einer Gegen- bzw. Rückkopplungskapazität Ci (8) und einem Gegen- bzw. Rückkopplungswiderstand Ri (10) zugeordnet ist und der Vorverstärker mit einer Spannung VDD versorgt wird, wobei Ri, Ip und VDD so sind, dass:

$$Ri\,Ip < VDD$$

**20.** Benützung einer Vorrichtung nach einem der Ansprüche 1 bis 9 bei Umgebungstemperatur zur Detektion von Gammastrahlung, wobei der Detektor (14) mit einer bestimmten Spannung V betrieben wird, also eine bestimmte maximale Elektronenlaufzeit te max hat, und der Vorverstärker (4) einer Gegen- bzw. Rückkopplungskapazität Ci (8) und einem Gegen- bzw. Rückkopplungswiderstand Ri (10) zugeordnet ist, wobei Ci und Ri so sind, dass:

$$Ti = Ri\,Ci \gg te\ max$$

**21.** Benützung einer Vorrichtung nach einem der Ansprüche 1 bis 9 bei Umgebungstemperatur zur Detektion von Gammastrahlung, wobei der Detektor einen Dunkelstrom Ip hat, der Vorverstärker (4) einer Gegen- bzw. Rückkopplungskapazität Ci (8) und einem Gegen- bzw. Rückkopplungswiderstand Ri (10) zugeordnet ist und der Vorverstärker mit einer Spannung VDD versorgt wird, wobei Ri, Ip und VDD so sind, dass:

$$Ri \, Ip < VDD.$$

**Claims**

1. Semiconductor based device for the detection of gamma radiation comprising:

   - a semiconductor based detector (14),
   - an operational preamplifier (4) coupled to the detector,
   - a device for the use of a signal or a plurality of signals or a set of data or a plurality of data sets representative of the variation with time of a signal supplied by the said semiconductor based detector (14) in response to the interaction of a $\gamma$ photon with the semiconducting material, this device comprising means (58, 60, 62, 64, 66, 68, 70, 72) of producing data or a signal representative of the rise time of the electronic component of the total signal supplied by the detector, in other words the component of the signal that corresponds to the collection of electrons resulting from the interaction between each $\gamma$ photon and the semiconducting material and
   - means (65, 81) for producing a representative data unit or a representative signal of an amplitude of the electronic component of the signal or an amplitude of the total signal,

   **characterized in that**

   - the semiconductor of the detector has a resistivity above $10^9$ $\Omega$.cm,
   - the preamplifier (4) is located directly at the output of the detector (14) without a decoupling capacitance between the detector (14) and the preamplifier (4).

2. Device according to claim 1, **characterized in that** the device for exploiting a signal or a plurality of signals or a set of data or a plurality of data sets, each being representative of the time evolution of a signal supplied by the semiconductor based detector (14), also incorporates means (65, 81) for producing a representative data unit or a representative signal, either of the total detected charge, or of that part of the total charge resulting from the collection of electrons.

3. Device according to claim 1, **characterized in that** the device for the exploitation of a signal or a plurality of signals or a set of data or a plurality of data sets, each being representative of the time evolution of a signal supplied by the semiconductor based detector (14), also has means for producing a representative signal, or a data unit representative of the maximum electrical charge or the maximum charge corresponding to at least part of a first data set representing the rise times of electronic components and a second data set representing the total detected charges or the charges resulting from the collection of electrons and means making it possible to establish a relation or correlation between the first and second data sets.

4. Device according to claim 3, **characterized in that** the means for determining a maximum electric charge effect this on the basis of:

   - signals or data concerning:

     - the rise time of the signal electronic component,
     - the total charge detected or that part of the total charge resulting from the collection of electrons,
     - and on the basis of the relation or correlation between the first data set and the second data set.

5. Device according to claim 4, also having means for correcting the measured charge on the basis of the maximum charge, the rise time corresponding to said maximum charge and the effectively measured rise time.

6. Device according to any one of claims 1 to 5, the product of the mobility of electrons in the semiconductor by their life being greater than $10^{-4}$ $cm^2/V$.

7. Device according to either of the claims 1 or 6, the detector being made of CdTe or CdTe:Cl or CdZnTe:Cl or CdTeSe:Cl or CdZnTe or $HgI_2$ or $PbI_2$ or GaAs or PbIn.

8. Device according to any one of claims 1 to 7, the material from which the semiconductor is made being obtained using the HPBM method.

9. Device according to any one of claims 1 to 8, the thickness of the detector being between 3 mm and 6 mm.

10. Process for the detection of gamma radiation, making use of a device according to either of the claims 1 and 2 at ambient temperature, and a step in which exploitation takes place of signal or a set of data representative of the variation with time of a signal supplied by the semiconductor based detector (14) in response to the interaction of a γ photon with the semiconducting material, data or a signal being produced in the semiconducting material representative of the rise time of the electronic component of the signal supplied by the detector, in other words the component of the total signal that corresponds to the collection of electrons resulting from the interaction between each γ photon and the semiconducting material.

11. Process according to claim 10, which also produces data or a signal representative of either the total detected charge or the part of the total charge resulting from the collection of electrons.

12. Process according to either of claims 10 and 11, which also produces data or a signal representative of either the amplitude of the signal output by the detector, or the amplitude of the electronic component of the signal supplied by the detector.

13. Process for the detection of gamma radiation at ambient temperature according to claim 10, making use of a device according to claim 3, and also involving the establishment of a relation or correlation between on the one hand a first set of data representing the rise times of the electronic components and on the other a second data set representing either the total detected charges or those parts of the total charges resulting from the collection of electrons.

14. Process according to claim 13, wherein determination takes place or production takes place of a data unit or a signal representative of the maximum electronic charge or the maximum charge corresponding to at least part of the first and second data sets.

15. Process for the detection of gamma radiation according to claim 11 using, at ambient temperature, a device according to either of the claims 4 and 5, wherein:

- a maximum electrical charge is determined on the basis of:

  - signals or data concerning:

    - the rise time of the signal electronic component,
    - and the total detected charge or that part of the total charge resulting from the collection of electrons,
    - and on the basis of a relation or correlation between on the one hand a first data set representing the rise time of the electronic components and on the other a second data set representing either the total detected charges or those parts of the total charges resulting from the collection of electrons.

16. Process according to claim 15, wherein correction takes place of the measured charge on the basis of the maximum charge, the rise time corresponding to said maximum charge and the effectively measured rise time.

17. Process according to any one of claims 10 to 16, in which the voltage applied to the detector is between 100 and 500 V.

18. Process according to claims 10 to 16, the detector (14) operating at a determined voltage V, therefore having a determined maximum electronic transit time te max, the preamplifier (14) being associated with a counter-reaction capacitor $C_i$ (8) and a counter-reaction resistor $R_i$ (10) where $C_i$ and $R_i$ are such that:

$$T_i = R_i C_i \gg t_e \text{ max.}$$

19. Process according to claims 10 to 17, the detector having a darkness current $I_p$, the preamplifier (14) being associated with a counter-reaction capacitor $C_i$ (8) and a counter-reaction resistor $R_i$ (10), the preamplifier being powered at a voltage VDD, and $R_i$, $I_p$ and VDD being such that:

$$R_i I_p < \text{VDD.}$$

20. Use at ambient temperature of a device according to one of the claims 1 to 9, for the detection of gamma radiation, the detector (14) operating under a given voltage V, i.e. having a maximum electron transit time te max of a given nature, the preamplifier (14) being associated with a counter-reaction capacitor $C_i$ (8) and a counter-reaction resistor $R_i$ (10), $C_i$ and $R_i$ being such that:

$$T_i = R_i C_i \gg t_e \text{ max.}$$

21. Use at ambient temperature of a device according to one of the claims 1 to 9, for the detection of gamma radiation, the detector having a darkness current $I_p$, the preamplifier (14) being associated with a counter-reaction capacitor $C_i$ (8) and a counter-reaction resistor $R_i$ (10), the preamplifier being powered under a voltage VDD, $R_i$, $I_p$ and VDD being

such that:

Ri Ip < VDD.

FIG. 1

FIG. 2

FIG. 3

t. DE MONTEE (ns)

900
700
500
300
100

0   50   100   150   200

AMPLITUDE

## FIG. 4 A

t. DE MONTEE (ns)

900
700
500
300
100

0   50   100   150   200

AMPLITUDE

## FIG. 4 B

Nbre DE COUPS

8000
6000
4000
2000
0

0   50   100   150   200

A

B

AMPLITUDE

## FIG. 5

Nbre DE COUPS

10000
8000
6000
4000
2000
0

0   50   100   150   200

A

B

AMPLITUDE

## FIG. 6